# EUROPEAN PATENT SPECIFICATION

(11) **EP 3 080 182 B1**
(45) Date of publication and mention of the grant of the patent: **08.01.2020**
(21) Application number: 14810081.1
(22) Date of filing: 20.11.2014
(51) Int. Cl.: C08G 18/48, C08G 18/66, C08G 18/73, C08G 18/32

(54) **HIGHLY RESILIENT THERMOPLASTIC POLYURETHANES**
HOCHELASTISCHE THERMOPLASTISCHE POLYURETHANE
POLYURÉTHANES THERMOPLASTIQUES HAUTEMENT RÉSILIENTS

(30) Priority: 10.12.2013 US 201361913985 P
(43) Date of publication of application: 19.10.2016
(73) Proprietor: Lubrizol Advanced Materials, Inc., Cleveland, OH 44141-3247 (US)
(72) Inventor: MARIN, Romina, E-08160 Barcelona (ES); LU, Qiwei, Ohio 44131 (US); SANTAMARIA, Jesus, E-08160 Barcelona (ES); PAGES, Montse, E-08160 Barcelona (ES)
(74) Representative: Bradley, Josephine Mary
(86) International application number: PCT/US2014/066587
(87) International publication number: WO 2015/088734

(56) References cited:
- AU-A1- 2013 205 539
- US-A1- 2013 310 465

## Description

### FIELD OF THE INVENTION

The thermoplastic polyurethane (TPU) compositions described herein have a very good snap back properties (also called rebound resilience) while still maintaining a good combination of other properties, including hardness, low-temperature flexibility, abrasion resistance, weather-ability, low density, or any combination thereof. This combination of properties make the TPU compositions described herein useful materials for applications where polyamide copolymers (COPA) and/or polyether block amide (PEBA) materials have traditionally been used over TPU.

### BACKGROUND

This technology relates to thermoplastic polyurethane (TPU) compositions that demonstrate highly resilient properties superior to conventional TPU and at least comparable, if not superior to, copolyamide elastomers (COPA) and/or polyether block amide (PEBA) materials.

Highly resilient properties may also be described as elastic recovery properties. These properties may be evaluated by looking at a materials "recovery" and/or "snap back" and/or "rebound" properties.

Recovery properties of a polymer, and/or the determination of whether a specific polymer has "fast recovery" and/or "good snap back" properties can be based on how long it takes for an article made of the polymer to return to its original shape after being deformed. For example, how long it takes a shoe sole made of the polymer in question, when it is flexed and/or bent with the application of force, to return to its original shape once the force is released. For many applications, including shoe sole applications, the faster the recovery the better, that is, the faster the article returns to its original shape the better. Thus, materials with fast recovery properties are better suited for such applications.

Rebound resilience is an indication of hysteretic energy loss that can also be defined by the relationship between storage modulus and loss modulus. The percent rebound measured is inversely proportional to the hysteretic loss. Percentage resilience or rebound resilience is commonly used in quality control testing of polymers and compounding chemicals. Rebound resilience can be determined by a freely falling pendulum hammer and/or ball that is dropped from a given height that impacts a test specimen and imparts to it a certain amount of energy. A portion of that energy is returned by the specimen to the pendulum and may be measured by the extent to which the pendulum rebounds, whereby the restoring force is determined by gravity.

TPU composition have not been very good candidates for certain applications that require high resilience (for example very good snap back properties and/or rebound resilience) due to the difficulty of providing TPU composition with such properties that also maintain good hardness, low-temperature flexibility, abrasion resistance, weather-ability, and/or low density. Thus COPA and/or PEBA materials have often been used over TPU for such applications.

There is an ongoing need for TPU compositions that can deliver high resilience (for example, very good snap back properties and/or rebound resilience) while still maintaining a good combination of other properties, including hardness, low-temperature flexibility, abrasion resistance, weather-ability, low density, or any combination thereof. The technology described herein provides such hard thermoplastic polyurethane compositions.
AU 2013 205 539 A1 discloses a linear polymer obtainable by reacting together (a) a polyethylene glycol or polypropylene glycol; (b) a PEG-PPG-PEG or PPG-PEG-PPG block copolymer; (c) a difunctional compound; and (d) a difunctional isocyanate.

### SUMMARY

The disclosed technology provides a thermoplastic polyurethane (TPU) composition that includes the reaction product of: a) a polyisocyanate component that includes at least one linear aliphatic diisocyanate; b) a polyol component consisting essentially of poly(tetramethylene ether glycol); and c) a chain extender component that includes at least one diol chain extender of the general formula HO-(CH₂)ₓ-OH wherein x is an integer from 9 to 18 or even 9 to 16.

The invention further provides the described TPU compositions wherein said reaction product is a TPU having one or more of the following properties: i) a Shore D hardness, as measured by ASTM D2240, from 40 to 90 or even 50 to 100; ii) a density, as measured by ASTM D792, of less than 1.10 g/cm³; iii) a rebound resilience, as measured by ISO 4662 from 30 to 50 percent; iv) a temperature of melting, as measured by ISO 11357-2, of less than 180°C; v) a temperature of crystallization, as measured by ISO 11357-2, of less than 125°C; vi) an abrasion resistance, as measured by ISO 4649, of less than 32 mm³. Also disclosed are the described TPU compositions wherein said reaction product is a TPU having a snap back value, represented by the tan delta at 23°C and 0.1, 1 and/or 10 Hz of less than 0.17 or even no more than 0.14.

The invention further provides for the TPU compositions described herein wherein the described reaction product is a TPU having a Shore D hardness, as measured by ASTM D2240, from 50 to 70.

The invention further provides for the TPU compositions described herein wherein the polyisocyanate component that includes 1,6-hexanediisocyanate (HDI).

The invention further provides for the TPU compositions described herein wherein the poly(tetramethylene ether glycol) has a number average molecular weight from 1,000 to 3,000, or even from 1,500 to 2,500, or even about 2,000.

The invention further provides for the TPU compositions described herein wherein the chain extender component that includes 1,9-nonanediol, 1,10-decanediol, 1,11-undecanediol, 1,12-dodecanediol, or a combination thereof.

The invention further provides for the TPU compositions described herein wherein the polyisocyanate component further that includes dicyclohexylmethane-4,4'-diisocyanate (H12MDI), 4,4'-methylenebis(phenyl isocyanate) (MDI), toluene diisocyanate (TDI), isophorone diisocyanate (IPDI), lysine diisocyanate (LDI), 1,4-butane diisocyanate (BDI), 1,4-phenylene diisocyanate (PDI), 1,4-cyclohexyl diisocyanate (CHDI), 3,3'-dimethyl-4,4'-biphenylene diisocyanate (TODI), 1,5-naphthalene diisocyanate (NDI), or any combination thereof.

In other embodiments, the polyisocyanate component is essentially free of (or even completely free of) any non-linear aliphatic diisocyanates, any aromatic diisocyanates, or both. In still other embodiments, the polyisocyanate component is essentially free of (or even completely free of) any polyisocyanate other than the linear aliphatic diisocyanate described above, which in some embodiments is HDI.

In other embodiments, the polyol component is essentially free of (or even completely free of) any polyol other than the linear polyether polyol that is poly(tetramethylene glycol) (PTMEG) which may also be described as the reaction product of water and tetrahydrofuran and/or polytetramethylene ether glycol.

The invention further provides for the TPU compositions described herein wherein the chain extender component further includes one or more additional diol chain extenders, diamine chain extenders, or a combination thereof.

In other embodiments, the chain extender component is essentially free of (or even completely free of) any diamine chain extenders, or any combination thereof. In still other embodiments, the chain extender component is essentially free of (or even completely free of) any chain extender other than the diol chain extender of the general formula HO-(CH₂)ₓ-OH wherein x is an integer from 9 to 18 or even 9 to 16, which in some embodiments is 1,12-dodecanediol.

The invention further provides for the TPU compositions described herein wherein the TPU composition includes one or more additional additives. Useful additives include pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, and antimicrobials.

The invention further provides for a process of making the TPU compositions described herein. Said process includes the steps of: (I) reacting: a) a polyisocyanate component that includes at least one linear aliphatic diisocyanate; b) a polyol component consisting essentially of poly(tetramethylene ether glycol); and c) a chain extender component that includes at least one diol chain extender of the general formula HO-(CH₂)ₓ-OH wherein x is an integer from 9 to 18 or even 9 to 16. Any of the polyisocyanate components, polyol components, and/or chain extender components described herein may be used in the described process, such that any of the TPU compositions described herein may be made by the described process.

The invention further provides the described process where the process further includes the step of: (II) mixing the thermoplastic polyurethane composition of step (I) with one or more additional additives selected from the group consisting of pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, and antimicrobials.

The invention further provides an article that includes any of the TPU compositions described herein.

The invention further provides a method of improving the resilience (for example, the recovery and/or snap back properties) of a TPU composition, where the method includes the steps of: (I) reacting: a) a polyisocyanate component that includes at least one linear aliphatic diisocyanate; b) a polyol component consisting essentially of poly(tetramethylene ether glycol); and c) a chain extender component that includes at least one diol chain extender of the general formula HO-(CH₂)ₓ-OH wherein x is an integer from 9 to 18 or even 9 to 16; wherein the resulting TPU composition has improved resilience (for example the recovery and/or snap back properties) relative to the equivalent TPU composition made with one or more different components (where the TPU is not made from the combination of the specified polyisocyanate, polyol, and chain extender).

### DETAILED DESCRIPTION

Various preferred features and embodiments will be described below by way of non-limiting illustration.

The disclosed technology provides a thermoplastic polyurethane (TPU) composition that includes the reaction product of: a) a polyisocyanate component that includes at least one linear aliphatic diisocyanate; b) a polyol component consisting essentially of poly(tetramethylene ether glycol); and c) a chain extender component that includes at least one diol chain extender of the general formula HO-(CH₂)ₓ-OH wherein x is an integer from 9 to 18 or even 9 to 16.

By resilience and improving the resilience of a TPU composition, as used herein, it is mean that the TPU compositions of the invention have higher resilience than other TPU compositions not made according to the invention. This higher resilience may be demonstrated by the TPU compositions having faster recovery properties, having higher rebound resilience, having faster snap back properties, or any combination thereof, where each property and the methods of measuring it are described further below.

### The polyisocyanate

The TPU compositions described herein are made using: (a) a polyisocyanate component, which includes at least one linear aliphatic diisocyanate.

In some embodiments, the linear aliphatic diisocyanate may include 1,6-hexanediisocyanate, 1,4-butane diisocyanate, lysine diisocyanate, or any combination thereof. In some embodiments, the polyisocyanate component comprises 1,6-hexanediisocyanate.

In some embodiments, the polyisocyanate component may include one or more additional polyisocyanates, which are typically diisocyanates.

Suitable polyisocyanates which may be used in combination with the linear aliphatic diisocyanate described above may include linear or branched aromatic diisocyanates, branched aliphatic diisocyanates, or combinations thereof. In some embodiments, the polyisocyanate component includes one or more aromatic diisocyanates. In other embodiments, the polyisocyanate component is essentially free of, or even completely free of, aromatic diisocyanates.

These additional polyisocyanates may include dicyclohexylmethane-4,4'-diisocyanate (H12MDI), 4,4'-methylenebis(phenyl isocyanate) (MDI), toluene diisocyanate (TDI), isophorone diisocyanate (IPDI), lysine diisocyanate (LDI), 1,4-butane diisocyanate (BDI), 1,4-phenylene diisocyanate (PDI), 1,4-cyclohexyl diisocyanate (CHDI), 3,3'-dimethyl-4,4'-biphenylene diisocyanate (TODI), 1,5-naphthalene diisocyanate (NDI), or any combination thereof.

In some embodiments, the described TPU is prepared with a polyisocyanate component that includes HDI. In some embodiments, the TPU is prepared with a polyisocyanate component that consists essentially of HDI. In some embodiments, the TPU is prepared with a polyisocyanate component that consists of HDI.

In some embodiments, the thermoplastic polyurethane is prepared with a polyisocyanate component that includes (or consists essentially of, or even consists of) HDI and at least one of H12MDI, MDI, TDI, IPDI, LDI, BDI, PDI, CHDI, TODI, and NDI.

In still other embodiments, the polyisocyanate component is essentially free of (or even completely free of) any non-linear aliphatic diisocyanates, any aromatic diisocyanates, or both. In still other embodiments, the polyisocyanate component is essentially free of (or even completely free of) any polyisocyanate other than the linear aliphatic diisocyanate described above, which in some embodiments is HDI.

### The polyol component

The TPU compositions described herein are made using: (b) a polyol component consisting essentially of poly(tetramethylene ether glycol).

The invention further provides for the TPU compositions described herein wherein the poly(tetramethylene ether glycol) has a number average molecular weight from 1,000 to 3,000, or even from 1,500 to 2,500, or even about 2,000.

In other embodiments, the polyol component is essentially free of (or even completely free of) any polyester polyols, polycarbonate polyols, polysiloxane polyols, or all of the above. In still other embodiments, the polyol component is essentially free of (or even completely free of) any polyol other than the linear polyether polyol that is poly(tetramethylene ether glycol) (PTMEG) which may also be described as the reaction product of water and tetrahydrofuran.

The poly(tetramethylene ether glycol) may also be referred to as an hydroxyl terminated polyether intermediate. The polyether intermediate generally has a number average molecular weight (Mn) as determined by assay of the terminal functional groups which is an average molecular weight greater than about 700, or even from 700, 1,000, 1,500 or even 2,000 up to 10,000, 5,000, 3,000, 2,500, or even 2,000. In some embodiments, the polyether intermediate includes a blend of two or more different molecular weight polyethers, such as a blend of 2,000 Mn PTMEG and 1,000 Mn PTMEG.

In some embodiments, the thermoplastic polyurethane is prepared with a polyol component that consists of PTMEG.

### The chain extender

The TPU compositions described herein are made using: (c) a chain extender component that includes at least one diol chain extender of the general formula HO-(CH₂)ₓ-OH wherein x is an integer from 9 to 18 or even from 9 to 16. In other embodiments, x is an integer from 9 to 12. In other embodiments, x is the integer 9 or 12.

Useful diol chain extenders include 1,9-nonanediol, 1,10-decanediol, 1,11-undecanediol, 1,12-dodecanediol, or a combination thereof. In some embodiments, the chain extender component includes (or consists essentially of, or even consists of) 1,9-nonanediol, 1,10-decanediol, 1,11-undecanediol, 1,12-dodecanediol, or a combination thereof. In some embodiments, the chain extender component includes (or consists essentially of, or even consists of) 1,9-nonanediol, 1,12-dodecanediol, or a combination thereof.

In some embodiments, the chain extender component may further include one or more additional chain extenders. These additional chain extenders are not overly limited and may include diols (other than those described above), diamines, and combinations thereof.

Suitable additional chain extenders include relatively small polyhydroxy compounds, for example, lower aliphatic or short chain glycols having from 2 to 20, or 2 to 12, or 2 to 10 carbon atoms. Suitable examples include ethylene glycol, diethylene glycol, propylene glycol, dipropylene glycol, 1,4-butanediol (BDO), 1,6-hexanediol (HDO), 1,3-butanediol, 1,5-pentanediol, neopentylglycol, 1,4-cyclohexanedimethanol (CHDM), 2,2-bis[4-(2-hydroxyethoxy)phenyl]propane (HEPP), hexamethylenediol, heptanediol, nonanediol, dodecanediol, ethylenediamine, butanediamine, hexamethylenediamine, and hydroxyethyl resorcinol (HER), and the like, as well as mixtures thereof. In some embodiments, the chain extender includes BDO, HDO, or a combination thereof. In some embodiments, the chain extender includes BDO. Other glycols, such as aromatic glycols could be used, but in some embodiments the TPUs described herein are essentially free of or even completely free of such materials.

In some embodiments, the additional chain extender includes a cyclic chain extender. Suitable examples include CHDM, HEPP, HER, and combinations thereof. In some embodiments, the additional chain extender includes an aromatic cyclic chain extender, for example HEPP, HER, or a combination thereof. In some embodiments, the additional chain extender includes an aliphatic cyclic chain extender, for example, CHDM. In some embodiments, the additional chain extender is substantially free of, or even completely free of aromatic chain extenders, for example, aromatic cyclic chain extenders. In some embodiments, the additional chain extender is substantially free of, or even completely free of polysiloxanes.

In some embodiments, the chain extender component includes 1,9-nonanediol, 1,10-decanediol, 1,11-undecanediol, 1,12-dodecanediol, or a combination thereof. In some embodiments, the chain extender component includes 1,10-decanediol, 1,11-undecanediol, 1,12-dodecanediol, or a combination thereof. In some embodiments the chain extender component includes 1,12-dodecanediol.

### The thermoplastic polyurethane compositions

The compositions described herein are TPU compositions. They contain one or more TPU. These TPU are prepared by reacting: a) the polyisocyanate component described above, that includes a linear aliphatic diisocyanate; b) the polyol component described above, that includes a polyether polyol; and c) the chain extender component that includes at least one diol chain extender of the general formula HO-(CH₂)ₓ-OH wherein x is an integer from 9 to about 18 or even 9 to 16, as described above.

The resulting TPU has: i) a Shore D hardness, as measured by ASTM D2240, from 40 to 90 or even 50 to 100, or even from 50 to 70; ii) a density, as measured by ASTM D792, of less than 1.10 g/cm3; iii) a rebound resilience, as measured by ISO 4662 from 30 to 50 percent; iv) a snap back value, represented by the tan delta at 23°C and 1 Hz, or 0.1 Hz and/or 10 Hz of less than 0.17 or even no more than 0.14; v) a temperature of melting, as measured by ISO 11357-2, of less than 180°C; vi) a temperature of crystallization, as measured by ISO 11357-2, of less than 125°C, vii) an abrasion resistance, as measured by ISO 4649, of less than 32 mm³.or viii) any combination thereof. The tan delta, or loss factor, is measured using a dynamic analyzer under the following conditions: frequency = 0.1, 1 and 10 Hz, strain= 0.2%, and heating rate = 1 °C/min from -150 to 200°C. Tan Delta is a measure of damping, i.e., energy dissipation. Tan Delta is the viscous modulus divided by the elastic modulus. The higher the Tan Delta, the higher the energy dissipation and the lower the snap back performance, and likewise, the lower the tan delta, the less dissipation of energy in a material under cyclic load, and so the better the snap back properties of the material.

In some embodiments, the TPU has a snap back value, represented by the tan delta at 23°C and 1 Hz of less than 0.17 or even no more than 0.14. In some embodiments, the TPU has a snap back value, represented by the tan delta at 23°C and 0.1 Hz of less than 0.17 or even no more than 0.14. In some embodiments, the TPU has a snap back value, represented by the tan delta at 23°C and 10 Hz of less than 0.15, or even less than 0.14, or even no more than 0.12. In still other embodiments, the TPU has snap back values at 23°C and 1 Hz of less than 0.17 or even no more than 0.15, at 0.1 Hz of less than 0.17 or even no more than 0.15, and at 10 Hz of less than 0.15, or even less than 0.14, or even no more than 0.12.

In some embodiments, the TPU has: a Shore D hardness from 40 to 90 or even 50 to 100, or even from 50 to 70; and a snap back value of no more than 0.14 at 0.1 Hz, or 1.0 Hz, and/or 10 Hz and 23°C. In some embodiments, the TPU has: a Shore D hardness from 40 to 90 or even 50 to 100, or even from 50 to 70; a rebound resilience from 30 to 50 percent; and a snap back value of no more than 0.14 at 0.1 Hz, or 1.0 Hz, and/or 10 Hz and 23°C.

In some embodiments, the TPU has: i) a Shore D hardness from 40 to 90 or even 50 to 100, or even from 50 to 70; ii) a density of less than 1.10 g/cm³; iii) a rebound resilience from 30 to 50 percent; iv) a snap back value of no more than 0.14; v) a temperature of melting of less than 180°C; vi) a temperature of crystallization of less than 125°C, and vii) an abrasion resistance, as measured by ISO 4649, of less than 32 mm³.

In some embodiments, the TPU compositions of the invention have a hard segment content of 50 to 99 percent by weight, where the hard segment content is the portion of the TPU derived from the polyisocyanate component and the chain extender component (the hard segment content of the TPU may be calculated by adding the weight percent content of chain extender and polyisocyanate in the TPU and dividing that total by the sum of the weight percent contents of the chain extender, polyisocyanate, and polyol in the TPU). In other embodiments, the hard segment content is from 50 to 99, or from 60 to 98, or from 63 to 98 percent by weight, 63.5 to 98 percent by weight, or even 63.5 to 97.5 percent by weight. The rest of the TPU is derived from the polyol component, which may be present from 1 to 50 percent by weight, or even from 2 to 37, 2 to 36.5, or 2.5 to 36.5 percent by weight.

In some embodiments, the molar ratio of the chain extender to the polyol of the TPU is not limited so long as the hardness and snap back requirements are met. In some embodiments, the molar ratio of the chain extender to the polyol of the TPU (chain extender : polyol) is from 8:1 to 220:1, or from 8:1 to 211:1, or from 9:1 to 210:1, or even from 8.9:1 up to 210.4:1.

In still other embodiments, the TPU materials described herein have a density from 1 to 1.1 g/cm3, a melting temperature between 160 and 195°C, a temperature of crystallization between 105 and 140°C, a tensile strength between 30 and 50 MPa, an elongation at break between 200 and 600 percent, a rebound resilience value between 30 and 50 percent, and an abrasion resistance between 0 and 50 mm³. In some embodiments, the TPU materials described herein have a density of about 1.0 g/cm3, a melting temperature of about 175 to 185°C, a temperature of crystallization of about 115 to 130°C, a tensile strength between 40 and 45 MPa, an elongation at break between 350 and 550 percent, a rebound resistance value of about 40 percent, and an abrasion resistance lower than 40, lower than 30, or even lower than 20 mm³.

The described compositions include the TPU materials described above and also TPU compositions that include such TPU materials and one or more additional components. These additional components include other polymeric materials that may be blended with the TPU described herein. These additional components also include one or more additives that may be added to the TPU, or blend containing the TPU, to impact the properties of the composition.

The TPU described herein may also be blended with one or more other polymers. The polymers with which the TPU described herein may be blended are not overly limited. In some embodiments, the described compositions include a two or more of the described TPU materials. In some embodiments, the compositions include at least one of the described TPU materials and at least one other polymer, which is not one of the described TPU materials. In some embodiments, the described blends will have the same combination of properties described above for the TPU composition. In other embodiments, the TPU composition will of course have the described combination of properties, while the blend of the TPU composition with one or more of the other polymeric materials described above may or may not.

Polymers that may be used in combination with the TPU materials described herein also include more conventional TPU materials such as non-caprolactone polyester-based TPU, polyether-based TPU, or TPU containing both non-caprolactone polyester and polyether groups. Other suitable materials that may be blended with the TPU materials described herein include polycarbonates, polyolefins, styrenic polymers, acrylic polymers, polyoxymethylene polymers, polyamides, polyphenylene oxides, polyphenylene sulfides, polyvinylchlorides, chlorinated polyvinylchlorides, polylactic acids, or combinations thereof.

Polymers for use in the blends described herein include homopolymers and copolymers. Suitable examples include: (i) a polyolefin (PO), such as polyethylene (PE), polypropylene (PP), polybutene, ethylene propylene rubber (EPR), polyoxyethylene (POE), cyclic olefin copolymer (COC), or combinations thereof; (ii) a styrenic, such as polystyrene (PS), acrylonitrile butadiene styrene (ABS), styrene acrylonitrile (SAN), styrene butadiene rubber (SBR or HIPS), polyalphamethylstyrene, styrene maleic anhydride (SMA), styrene-butadiene copolymer (SBC) (such as styrene-butadiene-styrene copolymer (SBS) and styrene-ethylene/butadiene-styrene copolymer (SEBS)), styrene-ethylene/propylene-styrene copolymer (SEPS), styrene butadiene latex (SBL), SAN modified with ethylene propylene diene monomer (EPDM) and/or acrylic elastomers (for example, PS-SBR copolymers), or combinations thereof; (iii) a thermoplastic polyurethane (TPU) other than those described above; (iv) a polyamide, such as Nylon™, including polyamide 6,6 (PA66), polyamide 1,1 (PA11), polyamide 1,2 (PA12), a copolyamide (COPA), or combinations thereof; (v) an acrylic polymer, such as polymethyl acrylate, polymethylmethacrylate, a methyl methacrylate styrene (MS) copolymer, or combinations thereof; (vi) a polyvinylchloride (PVC), a chlorinated polyvinylchloride (CPVC), or combinations thereof; (vii) a polyoxyemethylene, such as polyacetal; (viii) a polyester, such as polyethylene terephthalate (PET), polybutylene terephthalate (PBT), copolyesters and/or polyester elastomers (COPE) including polyether-ester block copolymers such as glycol modified polyethylene terephthalate (PETG), polylactic acid (PLA), polyglycolic acid (PGA), copolymers of PLA and PGA, or combinations thereof; (ix) a polycarbonate (PC), a polyphenylene sulfide (PPS), a polyphenylene oxide (PPO), or combinations thereof; or combinations thereof.

In some embodiments, these blends include one or more additional polymeric materials selected from groups (i), (iii), (vii), (viii), or some combination thereof. In some embodiments, these blends include one or more additional polymeric materials selected from group (i). In some embodiments, these blends include one or more additional polymeric materials selected from group (iii). In some embodiments, these blends include one or more additional polymeric materials selected from group (vii). In some embodiments, these blends include one or more additional polymeric materials selected from group (viii).

The additional additives suitable for use in the TPU compositions described herein are not overly limited. Suitable additives include pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, antimicrobials, and any combination thereof.

In some embodiments, the additional component is a flame retardant. Suitable flame retardants are not overly limited and may include a boron phosphate flame retardant, a magnesium oxide, a dipentaerythritol, a polytetrafluoroethylene (PTFE) polymer, or any combination thereof. In some embodiments, this flame retardant may include a boron phosphate flame retardant, a magnesium oxide, a dipentaerythritol, or any combination thereof. A suitable example of a boron phosphate flame retardant is BUDIT 326, commercially available from Budenheim USA, Inc. When present, the flame retardant component may be present in an amount from 0 to 10 weight percent of the overall TPU composition, in other embodiments from 0.5 to 10, or from 1 to 10, or from 0.5 or 1 to 5, or from 0.5 to 3, or even from 1 to 3 weight percent of the overall TPU composition.

The TPU compositions described herein may also include additional additives, which may be referred to as a stabilizer. The stabilizers may include antioxidants such as phenolics, phosphites, thioesters, and amines, light stabilizers such as hindered amine light stabilizers and benzothiazole UV absorbers, and other process stabilizers and combinations thereof. In one embodiment, the preferred stabilizer is Irganox 1010 from BASF and Naugard 445 from Chemtura. The stabilizer is used in the amount from about 0.1 weight percent to about 5 weight percent, in another embodiment from about 0.1 weight percent to about 3 weight percent, and in another embodiment from about 0.5 weight percent to about 1.5 weight percent of the TPU composition.

In addition, various conventional inorganic flame retardant components may be employed in the TPU composition. Suitable inorganic flame retardants include any of those known to one skilled in the art, such as metal oxides, metal oxide hydrates, metal carbonates, ammonium phosphate, ammonium polyphosphate, calcium carbonate, antimony oxide, clay, mineral clays including talc, kaolin, wollastonite, nanoclay, montmorillonite clay which is often referred to as nanoclay, and mixtures thereof. In one embodiment, the flame retardant package includes talc. The talc in the flame retardant package promotes properties of high limiting oxygen index (LOI). The inorganic flame retardants may be used in the amount from 0 to about 30 weight percent, from about 0.1 weight percent to about 20 weight percent, in another embodiment about 0.5 weight percent to about 15 weight percent of the total weight of the TPU composition.

Still further optional additives may be used in the TPU compositions described herein. The additives include colorants, antioxidants (including phenolics, phosphites, thioesters, and/or amines), antiozonants, stabilizers, inert fillers, lubricants, inhibitors, hydrolysis stabilizers, light stabilizers, hindered amines light stabilizers, benzotriazole UV absorber, heat stabilizers, stabilizers to prevent discoloration, dyes, pigments, inorganic and organic fillers, reinforcing agents and combinations thereof.

All of the additives described above may be used in an effective amount customary for these substances. The non-flame retardants additives may be used in amounts of from about 0 to about 30 weight percent, in one embodiment from about 0.1 to about 25 weight percent, and in another embodiment about 0.1 to about 20 weight percent of the total weight of the TPU composition.

These additional additives can be incorporated into the components of, or into the reaction mixture for, the preparation of the TPU resin, or after making the TPU resin. In another process, all the materials can be mixed with the TPU resin and then melted or they can be incorporated directly into the melt of the TPU resin.

The TPU materials described above may be prepared by a process that includes the step of (I) reacting: a) the polyisocyanate component described above, that includes at least one linear aliphatic diisocyanate; b) the polyol component described above, that includes at least one polyether polyol; and c) the chain extender component described above that include at least one diol chain extender of the general formula HO-(CH₂)ₓ-OH wherein x is an integer from 9 to about 18 or even 9 to 16, as described above.

The process may further include the step of: (II) mixing the TPU composition of step (I) with one or more blend components, including one or more additional TPU materials and/or polymers, including any of those described above.

The process may further include the step of: (II) mixing the TPU composition of step (I) with one or more additional additives selected from the group consisting of pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, and antimicrobials.

The process may further include the step of: (II) mixing the TPU composition of step (I) with one or more blend components, including one or more additional TPU materials and/or polymers, including any of those described above, and/or the step of: (III) mixing the TPU composition of step (I) with one or more additional additives selected from the group consisting of pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, and antimicrobials.

The TPU materials and/or compositions described herein may be used in he prepared of one or more articles. The specific type of articles that may be made from the TPU materials and/or compositions described herein are not overly limited.

The technology described herein also provides a method of improving the resilience (for example, the recovery and/or snap back properties) of a TPU materials and/or composition. The method involves using the linear aliphatic diisocyanate described above, the polyether polyol described above and the chain extender component described above which includes at least one diol chain extender of the general formula HO-(CH₂)ₓ-OH wherein x is an integer from 9 to about 18 or even 9 to 16, to prepare a TPU material, in place of or in combination with the polyol and chain extender of the original TPU, resulting in a TPU material and/or compositions with improved resilience (for example recovery and/or snap back properties).

The invention further provides an article made with the TPU materials and/or compositions described herein. In some embodiments these articles are prepared foaming, blow molding, injection molding, or any combination thereof.

The amount of each chemical component described is presented exclusive of any solvent or diluent oil, which may be customarily present in the commercial material, that is, on an active chemical basis, unless otherwise indicated. However, unless otherwise indicated, each chemical or composition referred to herein should be interpreted as being a commercial grade material which may contain the isomers, byproducts, derivatives, and other such materials which are normally understood to be present in the commercial grade.

It is known that some of the materials described above may interact in the final formulation, so that the components of the final formulation may be different from those that are initially added. For instance, metal ions (of, e.g., a flame retardant) can migrate to other acidic or anionic sites of other molecules. The products formed thereby, including the products formed upon employing the composition of the technology described herein in its intended use, may not be susceptible of easy description. Nevertheless, all such modifications and reaction products are included within the scope of the technology described herein; the technology described herein encompasses the composition prepared by admixing the components described above.

### EXAMPLES

The technology described herein may be better understood with reference to the following non-limiting examples.

*Example Set A.* A series of examples with Shore D hardness, as measured by ASTM D2240, of about 50 are prepared to demonstrate the benefits of the invention. The formulations of the TPU examples are summarized in the tables below. Each of the examples is prepared by reacting the components and then forming a sample for testing by means of injection molding.

**Table 1: Formulations of Examples in Example Set A**

| | Polyisocyanate¹ | Polyol² | Chain Extender³ | Percent Hard Segment⁴ |
|---|---|---|---|---|
| Comp Ex A-1⁵ | N/A | N/A | N/A | N/A |
| Comp Ex A-2 | HDI | PTMEG 2K | BDO | 65.0 |
| Comp Ex A-3 | MDI | PTMEG 2K | DDO | 62.5 |
| Comp Ex A-4 | HDI | PBADP 2K | DDO | 55.0 |
| Inv Ex A-5 | HDI | PTMEG 2K | DDO | 59.4 |

| | | | | |
|---|---|---|---|---|
| *1* - *For the polyisocyanate: HDI is 1,6-hexanediisocyanate and MDI is 4,4'-methylenebis(phenyl isocyanate).* *2* - *For the polyol: PTMEG 2K is a 2,000 number average molecular weight polytetramethylene ether glycol polyether polyol and PBADP 2K is a 2,000 number average molecular weight polybutylene adipate polyester polyol* *3* - *For the chain extender: DDO is 1,12-dodecanediol and BDO is 1,4-butanediol.* *4 - The Percent Hard Segment is calculated by adding the weight percent content of chain extender and polyisocyanate in the TPU and dividing that total by the sum of the weight percent contents of the chain extender, polyisocyanate and polyol in the TPU.* *5* - *Comparative Example A-1 is a commercially available polyether block amide marketed as PEBAX® 5533 by Arkema, included for comparison.* | | | | |

Each sample is tested to verify its hardness (as measured by ASTM D5540), and then also to test its density at 20°C (as measured by ASTM D792), its thermal properties (temperature of melting and temperature of crystallization as measured by ISO 11357-2), its mechanical properties (strength, modulus and elongation as measured by ASTM D-412), its abrasion resistance (as measured by ISO 4649), and its rebound resilience and snap back (as measured by the methods described above).

**Table 2: Test Results from Example Set A**

| | Comp Ex A-1 | Comp Ex A-2 | Comp Ex A-3 | Comp Ex A-4 | Inv Ex A-5 |
|---|---|---|---|---|---|
| Hardness | 51.5 | 52.2 | 50.6 | 50.3 | 50.2 |
| Density (g/cm³) | 1.01 | 1.10 | 1.10 | 1.07 | 1.05 |
| Tm (°C) | 173 | 192 | 154 | 166 | 161 |
| Tc (°C) | 114 | 124 | 80 | 108 | 111 |
| Tensile Strength (MPa) | 44.8 | 38.9 | 41.3 | 32.4 | 40.1 |
| Modulus at 100% (MPa) | 10.8 | 20.1 | 13.4 | 13.2 | 15.5 |
| Modulus at 300% (MPa) | 17.7 | 35.9 | 30.4 | 16.7 | 19.9 |
| Elongation (at break) (%) | 550 | 330 | 360 | 600 | 600 |
| Tan Delta at 23°C, 0.1 Hz | 0.103 | 0.190 | 0.219 | 0.133 | 0.129 |
| Tan Delta at 23°C, 1 Hz | 0.099 | 0.183 | 0.243 | 0.146 | 0.125 |
| Tan Delta at 23°C, 10 Hz | 0.114 | 0.131 | 0.255 | 0.128 | 0.095 |
| Rebound Resilience (%) | 43 | 45 | 29 | 40 | 47 |
| Abrasion Resistance (mm³) | 8 | 29 | 19 | 10 | 12 |

The results show the TPU compositions described herein provides a superior combination of properties relative to the PEBAX® comparative examples and the non-inventive TPU examples, were all the samples have a similar hardness. In particular it is noted that Inventive Example A-5 has tan delta results, and so snap back properties (lower values denote better performance), at least comparable to the PEBAX® of Comparative Example A-1 and much better than the TPU of Comparative Examples A-3, A-3, and A-4, while also having better rebound resilience (higher values denote better performance) than any of the examples and better abrasion resistance (lower values denote better performance) than any of the other TPU materials.

*Example Set B.* A second series of examples with Shore D hardness, as measured by ASTM D2240, of about 60 are prepared to demonstrate the benefits of the invention. The formulations of the TPU examples are summarized in the tables below. Each of the examples is prepared by reacting the components and then forming a sample for testing by means of injection molding.

**Table 3: Formulations of Examples in Example Set B**

| | Polyisocyanate¹ | Polyol² | Chain Extender³ | Percent Hard Segment⁴ |
|---|---|---|---|---|
| Comp Ex B-1⁵ | N/A | N/A | N/A | N/A |
| Comp Ex B-2 | HDI | PTMEG 2K | BDO | 75.0 |
| Comp Ex B-3 | MDI | PTMEG 2K | DDO | 90.0 |
| Comp Ex B-4 | HDI | PBADP 2K | DDO | 70.2 |
| Inv Ex B-5 | HDI | PTMEG 2K | DDO | 84.9 |

| | | | | |
|---|---|---|---|---|
| *1* - *For the polyisocyanate: HDI is 1,6-hexanediisocyanate and MDI is 4,4'-methylenebis(phenyl isocyanate).* *2* - *For the polyol: PTMEG 2K is a 2,000 number average molecular weight polytetramethylene ether glycol polyether polyol and PBADP 2K is a 2,000 number average molecular weight polybutylene adipate polyester polyol* *3* - *For the chain extender: DDO is 1,12-dodecanediol and BDO is 1,4-butanediol.* *4 - The Percent Hard Segment is calculated by adding the weight percent content of chain extender and polyisocyanate in the TPU and dividing that total by the sum of the weight percent contents of the chain extender, polyisocyanate and polyol in the TPU.* *5* - *Comparative Example B-1 is a commercially available polyether block amide marketed as PEBAX® 6333 by Arkema, included for comparison.* | | | | |

Each sample is tested using the same procedures described above.

**Table 4: Test Results from Example Set B**

| | Comp Ex B-1 | Comp Ex B-2 | Comp Ex B-3 | Comp Ex B-4 | Inv Ex B-5 |
|---|---|---|---|---|---|
| Hardness | 60.4 | 62.1 | 59.9 | 62.9 | 64.4 |
| Density (g/cm³) | 1.02 | 1.13 | 1.11 | 1.10 | 1.07 |
| Tm (°C) | 183 | 180 | 134 | 163 | 163 |
| Tc (°C) | 125 | 114 | 80 | 120 | 109 |
| Tensile Strength (MPa) | 41.0 | 44.6 | 44.5 | 35.6 | 31.3 |
| Modulus at 100% (MPa) | 15.4 | 26.0 | 20.7 | 27.1 | 24.8 |
| Modulus at 300% (MPa) | 26.8 | - | 41.9 | 28.3 | - |
| Elongation (at break) (%) | 425 | 275 | 315 | 350 | 225 |
| Tan Delta at 23°C, 0.1 Hz | 0.135 | 0.182 | 0.235 | 0.139 | 0.121 |
| Tan Delta at 23°C, 1 Hz | 0.137 | 0.180 | 0.222 | 0.148 | 0.136 |
| Tan Delta at 23°C, 10 Hz | 0.143 | 0.142 | 0.204 | 0.130 | 0.120 |
| Rebound Resilience (%) | 37 | 42 | 34 | 37 | 37 |
| Abrasion Resistance (mm³) | 14 | 58 | 23 | 22 | 22 |

The results show the TPU compositions described herein provides a superior combination of properties relative to the PEBAX® comparative examples and the non-inventive TPU examples, were all the samples have a similar hardness. In particular it is noted that Inventive Example B-5 has tan delta results, and so snap back properties, better than the PEBAX® of Comparative Example A-1 or any of the TPU of Comparative Examples, while also having better abrasion resistance than any of the other TPU materials while still having acceptable rebound resilience.

*Example Set C.* A third series of examples with a Shore D hardness, as measured by ASTM D2240, of about 70 are prepared to demonstrate the benefits of the invention. The formulations of the TPU examples are summarized in the tables below. Each of the examples is prepared by reacting the components and then forming a sample for testing by means of injection molding.

**Table 5: Formulations of Examples in Example Set C**

| | Polyisocyanate¹ | Polyol² | Chain Extender³ | Percent Hard Segment⁴ |
|---|---|---|---|---|
| Comp Ex C-1⁵ | N/A | N/A | N/A | N/A |
| Comp Ex C-2 | HDI | PTMEG 2K | BDO | 85.0 |
| Comp Ex C-3 | HDI | PBADP 2K | DDO | 94.2 |
| Inv Ex C-4 | HDI | PTMEG 2K | DDO | 96.5 |

| | | | | |
|---|---|---|---|---|
| *1 - For the polyisocyanate: HDI is 1,6-hexanediisocyanate.* *2* - *For the polyol: PTMEG 2K is a 2,000 number average molecular weight polytetramethylene ether glycol polyether polyol and PBADP 2K is a 2,000 number average molecular weight polybutylene adipate polyester polyol* *3 - For the chain extender: DDO is 1,12-dodecanediol and BDO is 1,4-butanediol.* *4* - *The Percent Hard Segment is calculated by adding the weight percent content of chain extender and polyisocyanate in the TPU and dividing that total by the sum of the weight percent contents of the chain extender, polyisocyanate and polyol in the TPU.* *5* - *Comparative Example C-1 is a commercially available polyether block amide marketed as PEBAX® 7033 by Arkema, included for comparison.* | | | | |

Each sample is tested using the same procedures described above.

**Table 6: Test Results from Example Set C**

| | Comp Ex C-1 | Comp Ex C-2 | Comp Ex C-3 | Inv Ex C-4 |
|---|---|---|---|---|
| Hardness | 66.1 | 69.2 | 67.5 | 68.5 |
| Density (g/cm³) | 1.02 | 1.15 | 1.09 | 1.09 |
| Tm (°C) | 183 | 186 | 173 | 165 |
| Tc (°C) | 128 | 127 | 117 | 122 |
| Tensile Strength (MPa) | 44.2 | 42.7 | 42.8 | 36.9 |
| Modulus at 100% (MPa) | 20.4 | 39.2 | 33.1 | 33.3 |
| Modulus at 300% (MPa) | 33.7 | - | 34.4 | - |
| Elongation (at break) (%) | 370 | 100 | 310 | 200 |
| Tan Delta at 23°C, 0.1 Hz | 0.130 | 0.186 | 0.166 | 0.150 |
| Tan Delta at 23°C, 1 Hz | 0.133 | 0.174 | 0.154 | 0.150 |
| Tan Delta at 23°C, 10 Hz | 0.135 | 0.137 | 0.123 | 0.120 |
| Rebound Resilience (%) | 36 | 41 | 37 | 37 |
| Abrasion Resistance (mm³) | 13 | 88 | 36 | 31 |

The results show the TPU compositions described herein provides a superior combination of properties relative to the PEBAX® comparative examples and the non-inventive TPU example, were all the samples have a similar hardness. In particular it is noted that Inventive Example C-4 has tan delta results, and so snap back properties, comparable to the PEBAX® of Comparative Example C-1 and much better than the TPU of Comparative Examples, while also having better abrasion resistance than the other TPU materials while still having acceptable rebound resilience.

As described hereinafter the molecular weight of the materials described above have been determined using known methods, such as GPC analysis using polystyrene standards. Methods for determining molecular weights of polymers are well known. The methods are described for instance: (i) P.J. Flory, "Principles of star polymer Chemistry", Cornell University Press 91953), Chapter VII, pp 266-315; or (ii) "Macromolecules, an Introduction to star polymer Science", F. A. Bovey and F. H. Winslow, Editors, Academic Press (1979), pp 296-312. As used herein the weight average and number weight average molecular weights of the materials described are obtained by integrating the area under the peak corresponding to the material of interest, excluding peaks associated with diluents, impurities, uncoupled star polymer chains and other additives.

## Claims

1. A thermoplastic polyurethane composition comprising the reaction product of:
a) a polyisocyanate component comprising at least one linear aliphatic diisocyanate;
b) a polyol component consisting essentially of poly(tetramethylene ether glycol); and
c) a chain extender component comprising at least one diol chain extender of the general formula HO-(CH₂)ₓ-OH wherein x is an integer from 9 to 18.

2. The thermoplastic polyurethane composition of claim 1 wherein said reaction product is a thermoplastic polyurethane having one or more of the following properties:
i) a Shore D hardness, as measured by ASTM D2240, from 40 to 90;
ii) a density, as measured by ASTM D792, of less than 1.10;
iii) a rebound resilience, as measured by ISO 4662 from 30 to 50 percent;
iv) a temperature of melting, as measured by ISO 11357-2, of less than 180°C;
v) a temperature of crystallization, as measured by ISO 11357-2, of less than 125°C;
vi) an abrasion resistance, as measured by ISO 4649, of less than 32 mm³.

3. The thermoplastic polyurethane composition of any of the claims 1 to 2 wherein the reaction product is a thermoplastic polyurethane having a Shore D hardness, as measured by ASTM D2240, from 50 to 70.

4. The thermoplastic polyurethane composition of any of the claims 1 to 3 wherein the polyisocyanate component comprises 1,6-hexanediisocyanate.

5. The thermoplastic polyurethane composition of any of the claims 1 to 4 wherein the polyether polyol has a number average molecular weight from 1,000 to 3,000.

6. The thermoplastic polyurethane composition of any of the claims 1 to 5 wherein the chain extender component comprises 1,9-nonanediol, 1,10-decanediol, 1,11-undecanediol, 1,12-dodecanediol, or a combination thereof.

7. The thermoplastic polyurethane composition of any of the claims 1 to 6 wherein the polyisocyanate component further comprises H12MDI, MDI, TDI, IPDI, LDI, BDI, PDI, CHDI, TODI, NDI, or any combination thereof.

8. The thermoplastic polyurethane composition of any of the claims 1 to 7 wherein the chain extender component further comprises one or more additional diol chain extenders, diamine chain extenders, or a combination thereof.

9. The thermoplastic polyurethane composition of any of the claims 1 to 8 wherein the thermoplastic polyurethane composition comprises one or more additional additives selected from the group consisting of pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, and antimicrobials.

10. A process of making a thermoplastic polyurethane composition, said process comprising the steps of: (I) reacting:
a) a polyisocyanate component comprising at least one linear aliphatic diisocyanate;
b) a polyol component consisting essentially of poly(tetramethylene ether glycol); and
c) a chain extender component comprising at least one diol chain extender of the general formula HO-(CH₂)ₓ-OH wherein x is an integer from 9 to 18.

11. The process of claim 10 where said process further comprises the step of: (II) mixing the thermoplastic polyurethane composition of step (I) with one or more additional additives selected from the group consisting of pigments, UV stabilizers, UV absorbers, antioxidants, lubricity agents, heat stabilizers, hydrolysis stabilizers, cross-linking activators, flame retardants, layered silicates, fillers, colorants, reinforcing agents, adhesion mediators, impact strength modifiers, and antimicrobials

12. An article comprising the thermoplastic polyurethane composition of any of the claims 1 to 9.

13. A method of improving the resilience of a thermoplastic polyurethane composition, said method including the steps of: (I) reacting:
a) a polyisocyanate component comprising at least one linear aliphatic diisocyanate;
b) a polyol component consisting essentially of poly(tetramethylene ether glycol); and
c) a chain extender component comprising at least one diol chain extender of the general formula HO-(CH₂)ₓ-OH wherein x is an integer from 9 to 18;
wherein the resulting thermoplastic polyurethane composition has improved resilience relative to the equivalent thermoplastic polyurethane composition made with one or more different components.

## Patentansprüche

1. Thermoplastische Polyurethanzusammensetzung umfassend das Reaktionsprodukt von:
a) einer Polyisocyanat-Komponente umfassend mindestens ein lineares aliphatisches Diisocyanat;
b) einer Polyolkomponente bestehend im Wesentlichen aus Poly(tetramethylenetherglycol); und
c) einer Kettenverlängerungskomponente umfassend mindestens ein Diolkettenverlängerungsmittel der allgemeinen Formel HO-(CH₂)ₓ-OH, wobei x eine ganze Zahl von 9 bis 18 ist.

2. Thermoplastische Polyurethanzusammensetzung nach Anspruch 1, wobei das Reaktionsprodukt ein thermoplastisches Polyurethan ist, das eine oder mehrere der folgenden Eigenschaften aufweist:
i) eine Shore D-Härte, wie durch ASTM D2240 gemessen, von 40 bis 90;
ii) eine Dichte, wie durch ASTM D792 gemessen, von weniger als 1,10;
iii) eine Rückprallelastizität, wie durch ISO 4662 gemessen, von 30 bis 50 Prozent;
iv) eine Schmelztemperatur, wie durch ISO 11357-2 gemessen, von weniger als 180°C;
v) eine Kristallisationstemperatur, wie durch ISO 11357-2 gemessen, von weniger als 125°C;
vi) eine Abriebresistenz, wie durch ISO 4649 gemessen, von weniger als 32 mm³.

3. Thermoplastische Polyurethanzusammensetzung nach einem der Ansprüche 1 bis 2, wobei das Reaktionsprodukt ein thermoplastisches Polyurethan ist, das eine Shore D-Härte, wie durch ASTM D2240 gemessen, von 50 bis 70 aufweist.

4. Thermoplastische Polyurethanzusammensetzung nach einem der Ansprüche 1 bis 3, wobei die Polyisocyanatkomponente 1,6-Hexandiisocyanat umfasst.

5. Thermoplastische Polyurethanzusammensetzung nach einem der Ansprüche 1 bis 4, wobei das Polyetherpolyol ein zahlendurchschnittliches Molekulargewicht von 1.000 bis 3.000 aufweist.

6. Thermoplastische Polyurethanzusammensetzung nach einem der Ansprüche 1 bis 5, wobei die Kettenverlängerungskomponente 1,9-Nonandiol, 1,10-Decandiol, 1,11-Undecandiol, 1,12-Dodecandiol oder eine Kombination davon umfasst.

7. Thermoplastische Polyurethanzusammensetzung nach einem der Ansprüche 1 bis 6, wobei die Polyisocyanatkomponente ferner H12MDI, MDI, TDI, IPDI, LDI, BDI, PDI, CHDI, TODI, NDI oder irgendeine Kombination davon umfasst.

8. Thermoplastische Polyurethanzusammensetzung nach einem der Ansprüche 1 bis 7, wobei die Kettenverlängerungskomponente ferner einen oder mehrere zusätzliche Diolkettenverlängerungsmittel, Diaminkettenverlängerungsmittel oder eine Kombination davon umfasst.

9. Thermoplastische Polyurethanzusammensetzung nach einem der Ansprüche 1 bis 9, wobei die thermoplastische Polyurethanzusammensetzung ein oder mehrere zusätzliche Zusatzmittel umfasst ausgewählt aus der Gruppe bestehend aus Pigmenten, UV-Stabilisatoren, UV-Absorptionsmitteln, Antioxidationsmitteln, Gleitmitteln, Wärmestabilisatoren, Hydrolysestabilisatoren, Vernetzungsaktivatoren, Flammverzögerungsmitteln, Schichtsilicaten, Füllstoffen, Farbmitteln, Verstärkungsmitteln, Haftvermittlern, Schlagfestigkeitsmodifiziermitteln und antimikrobiellen Mitteln.

10. Verfahren für die Herstellung einer thermoplastischen Polyurethanzusammensetzung, wobei das Verfahren die Schritte umfasst des: (I) Reagierens:
a) einer Polyisocyanatkomponente umfassend mindestens ein lineares aliphatisches Diisocyanat;
b) einer Polyolkomponente bestehend im Wesentlichen aus Poly(tetramethylenetherglycol); und
c) einer Kettenverlängerungskomponente umfassend mindestens ein Diolkettenverlängerungsmittel der allgemeinen Formel HO-(CH₂)ₓ-OH, wobei x eine ganze Zahl von 9 bis 18 ist.

11. Verfahren nach Anspruch 10, wobei das Verfahren ferner den Schritt umfasst des: (II) Mischens der thermoplastischen Polyurethanzusammensetzung nach Schritt (I) mit einem oder mehreren zusätzlichen Zusatzmitteln ausgewählt aus der Gruppe bestehend aus Pigmenten, UV-Stabilisatoren, UV-Absorptionsmitteln, Antioxidationsmitteln, Gleitmitteln, Wärmestabilisatoren, Hydrolysestabilisatoren, Vernetzungsaktivatoren, Flammverzögerungsmitteln, Schichtsilicaten, Füllstoffen, Farbmitteln, Verstärkungsmitteln, Haftvermittlern, Schlagfestigkeitsmodifiziermitteln und antimikrobiellen Mitteln.

12. Artikel umfassend die thermoplastische Polyurethanzusammensetzung nach irgendeinem der Ansprüche 1 bis 9.

13. Verfahren zum Verbessern des Elastizitätsverhaltens einer thermoplastischen Polyurethanzusammensetzung, wobei das Verfahren die Schritte umfasst des: (I) Reagierens:
a) einer Polyisocyanatkomponente umfassend mindestens ein lineares aliphatisches Diisocyanat;
b) einer Polyolkomponente bestehend im Wesentlichen aus Poly(tetramethylenetherglycol); und
c) einer Kettenverlängerungskomponente umfassend mindestens ein Diolkettenverlängerungsmittel der allgemeinen Formel HO-(CH₂)ₓ-OH, wobei x eine ganze Zahl von 9 bis 18 ist;
wobei die resultierende thermoplastische Polyurethanzusammensetzung ein verbessertes Elastizitätsverhalten im Vergleich mit der äquivalenten thermoplastischen Polyurethanzusammensetzung, die mit einer oder mehreren verschiedenen Komponenten hergestellt ist.

## Revendications

1. Composition de polyuréthane thermoplastique comprenant le produit réactionnel de:
a) un composant polyisocyanate comprenant au moins un diisocyanate aliphatique linéaire;
b) un composant polyol constitué essentiellement de poly(éther de tétraméthylène glycol); et
c) un composant extenseur de chaîne comprenant au moins un extenseur de chaîne diol de la formule générale HO-(CH₂)ₓ-OH où x est un nombre entier d'une valeur de 9 à 18.

2. Composition de polyuréthane thermoplastique selon la revendication 1, ledit produit réactionnel étant un polyuréthane thermoplastique ayant une ou plusieurs des propriétés suivantes:
i) une dureté Shore D, telle que mesurée selon la norme ASTM D2240, de 40 à 90;
ii) une densité, telle que mesurée selon la norme ASTM D792, inférieure à 1,10;
iii) une résilience de rebond, telle que mesurée selon la norme ISO 4662 de 30 à 50 pour cent;
iv) une température de fusion, telle que mesurée selon la norme ISO 11357-2, inférieure à 180°C;
v) une température de cristallisation, telle que mesurée selon la norme ISO 11357-2, inférieure à 125°C;
vi) une résistance à l'abrasion, telle que mesurée selon la norme ISO 4649, inférieure à 32 mm³.

3. Composition de polyuréthane thermoplastique selon l'une quelconque des revendications 1 à 2, le produit réactionnel étant un polyuréthane thermoplastique ayant une dureté Shore D, telle que mesurée selon la norme ASTM D2240, de 50 à 70.

4. Composition de polyuréthane thermoplastique selon l'une quelconque des revendications 1 à 3 dans laquelle le composant polyisocyanate comprend du 1,6-hexanediisocyanate.

5. Composition de polyuréthane thermoplastique selon l'une quelconque des revendications 1 à 4 dans laquelle le polyéther polyol présente un poids moléculaire moyen en nombre de 1000 à 3000.

6. Composition de polyuréthane thermoplastique selon l'une quelconque des revendications 1 à 5 dans laquelle le composant extenseur de chaîne comprend du 1,9-nonanediol, 1,10-décanediol, 1,11-undécanediol, 1,12-dodécanediol, ou une combinaison de ceux-ci.

7. Composition de polyuréthane thermoplastique selon l'une quelconque des revendications 1 à 6 dans laquelle le composant polyisocyanate comprend en outre du H12MDI, MDI, TDI, IPDI, LDI, BDI, PDI, CHDI, TODI, NDI, ou n'importe quelle combinaison de ceux-ci.

8. Composition de polyuréthane thermoplastique selon l'une quelconque des revendications 1 à 7 dans laquelle le composant extenseur de chaîne comprend en outre un ou plusieurs extenseurs de chaîne diol additionnels, extenseurs de chaîne diamine, ou une combinaison de ceux-ci.

9. Composition de polyuréthane thermoplastique selon l'une quelconque des revendications 1 à 8 dans laquelle la composition de polyuréthane thermoplastique comprend un ou plusieurs additifs additionnels sélectionnés dans le groupe constitué des pigments, des agents stabilisants du rayonnement UV, des agents d'absorption du rayonnement UV, des agents antioxydants, des agents lubrifiants, des agents stabilisants thermiques, des agents stabilisants de l'hydrolyse, des activateurs de réticulation, des agents retardateurs de flamme, des silicates stratifiés, des charges, des colorants, des agents de renfort, des médiateurs d'adhésion, des agents de modification de la résistance aux chocs, et des agents antimicrobiens.

10. Procédé de fabrication d'une composition de polyuréthane thermoplastique, ledit procédé comprenant les étapes de: (I) réaction:
a) d'un composant polyisocyanate comprenant au moins un diisocyanate aliphatique linéaire;
b) d'un composant polyol constitué essentiellement de poly(éther de tétraméthylène glycol); et
c) d'un composant extenseur de chaîne comprenant au moins un extenseur de chaîne diol de la formule générale HO-(CH₂)ₓ-OH où x est un nombre entier d'une valeur de 9 à 18.

11. Procédé selon la revendication 10 dans lequel ledit procédé comprend en outre l' étape de: (II) mélange de la composition de polyuréthane thermoplastique de l'étape (I) avec un ou plusieurs additifs additionnels sélectionnés dans le groupe constitué des pigments, des agents stabilisants du rayonnement UV, des agents d'absorption du rayonnement UV, des agents antioxydants, des agents lubrifiants, des agents stabilisants thermiques, des agents stabilisants de l'hydrolyse, des activateurs de réticulation, des agents retardateurs de flamme, des silicates stratifiés, des charges, des colorants, des agents de renfort, des médiateurs d'adhésion, des agents de modification de la résistance aux chocs, et des agents antimicrobiens.

12. Article comprenant la composition de polyuréthane thermoplastique selon l'une quelconque des revendications 1 à 9.

13. Procédé d'amélioration de la résilience d'une composition de polyuréthane thermoplastique, ledit procédé comprenant les étapes de: (I) réaction:
a) d'un composant polyisocyanate comprenant au moins un diisocyanate aliphatique linéaire;
b) d'un composant polyol constitué essentiellement de poly(éther de tétraméthylène glycol); et
c) d'un composant extenseur de chaîne comprenant au moins un extenseur de chaîne diol de la formule générale HO-(CH₂)ₓ-OH où x est un nombre entier d'une valeur de 9 à 18;
la composition de polyuréthane thermoplastique résultante ayant une résilience améliorée par rapport à la composition de polyuréthane thermoplastique équivalente constituée d'un ou plusieurs composants différents.
